# EUROPÄISCHE PATENTANMELDUNG

(11) **EP 1 935 680 A1**
(43) Veröffentlichungstag der Anmeldung: **25.06.2008**
(21) Anmeldenummer: 07022743.4
(22) Anmeldetag: 23.11.2007
(51) Int. Cl.: B60G 17/02, B60G 11/18

(54) **Radaufhängung für ein Kraftfahrzeug**

(30) Priorität: 21.12.2006 DE 102006061984
(71) Anmelder: ThyssenKrupp Bilstein Suspension GmbH, 58256 Ennepetal (DE); ThyssenKrupp Presta München/Esslingen GmbH, 80809 München (DE)
(72) Erfinder: Miller, Luitpold, 85521 Ottobrunn (DE); Ellmann, Siegfried, 85609 Aschheim (DE); Preukschat, Alfred, 53639 Königswinter (DE); Brendecke, Thomas, 31228 Peine (DE)
(74) Vertreter: Albrecht, Rainer Harald

(57) **Zusammenfassung**

Die Erfindung betrifft eine Radaufhängung (1) für ein Kraftfahrzeug mit einem über Lager (2) und eine federelastische Drehstabanordnung (3) an einem Fahrzeugaufbau (4) befestigbaren sowie um eine Längsachse drehbaren Querlenker (5), wobei die Drehstabanordnung (3) eine mit einem Ende an dem Fahrzeugaufbau (4) befestigbare Aufbaufeder (6) und eine mit einem Ende am Querlenker (5) befestigte Querlenkerfeder (7) aufweist und wobei die Aufbaufeder (6) und die Querlenkerfeder (7) an ihren freien Enden miteinander gekoppelt sind. Erfindungsgemäß sind die Querlenkerfeder (7) und die Aufbaufeder (6) über ein Einstellelement oder eine lösbare Verbindung (14) gekoppelt, wobei das Einstellelement bzw. die lösbare Verbindung (14) zu Einstellzwecken eine Verdrehung der einander zugeordneten Enden ermöglicht.

## Beschreibung

Die Erfindung betrifft eine Radaufhängung für ein Kraftfahrzeug mit einem über Lager und eine federelastische Drehstabanordnung an einem Fahrzeugaufbau befestigbaren sowie um eine Längsachse drehbaren Querlenker, wobei die Drehstabanordnung eine mit einem Ende an dem Fahrzeugaufbau befestigbare Aufbaufeder und eine mit einem Ende am Querlenker befestigte Querlenkerfeder aufweist und wobei die Aufbaufeder und die Querlenkerfeder an ihren freien Enden miteinander gekoppelt sind. Die Radaufhängung ist insbesondere als Einzelradaufhängung an zumindest einer Achse eines Personenkraftwagens oder eines Nutzkraftwagens vorgesehen.

Eine Radaufhängung mit den eingangs beschriebenen Merkmalen ist aus der Druckschrift DE 38 31 338 A1 bekannt. Sowohl die Aufbaufeder als auch die Querlenkerfeder sind rohrförmig als Drehstabfeder ausgebildet und koaxial angeordnet, wobei die Querlenkerfeder die Aufbaufeder umgibt und wobei die Drehstabfedern an ihren freien Enden über eine Koppelstelle fest verbunden sind. An dem gegenüberliegenden Ende der Drehstabfedern ist die Aufbaufeder mit dem Fahrzeugaufbau und die Querlenkerfeder mit dem Querlenker verbunden. Zwischen der Koppelstelle und dem Querlenker ist eine hydraulisch betätigbare Einrichtung zur Drehwinkelverstellung angeordnet, die abhängig von der Fahrsituation eine aktive Verstellung der Federkraft der Drehstabanordnung ermöglicht. Während die auf die Radaufhängung wirkende Gewichtskraft im Wesentlichen von der Drehstabanordnung aufgenommen wird, ermöglicht die Einrichtung zur Drehwinkelverstellung ausgehend von einer Normalposition der Drehstabanordnung im belasteten Zustand eine aktive Verstellung mit vergleichsweise kleinen Stellmomenten. Im kraftfreien Zustand der Einrichtung zur Drehwinkelverstellung ergibt sich die Radhöhe eines mit der Radaufhängung an einem Fahrzeug befestigten Rades einerseits aus der Gewichtskraft, die auf die Radaufhängung wirkt, und andererseits aus den federelastischen Eigenschaften der Drehstabanordnung.

Der Erfindung liegt die Aufgabe zugrunde, eine Radaufhängung für ein Kraftfahrzeug mit den eingangs beschriebenen Merkmalen anzugeben, die leicht an verschiedene Einbau- und Belastungssituationen angepasst werden kann.

Ausgehend von einer Radaufhängung mit den eingangs beschriebenen Merkmalen wird die Aufgabe erfindungsgemäß dadurch gelöst, dass die Querlenkerfeder und die Aufbaufeder über ein Einstellelement oder eine lösbare Verbindung gekoppelt sind, wobei das Einstellelement oder die lösbare Verbindung zu Einstellzwecken ein Verdrehen der einander zugeordneten Enden gegeneinander ermöglicht. Die Verbindung über das Einstellelement erlaubt beispielsweise einen Ausgleich von Fertigungstoleranzen der Aufbaufeder und der Querlenkerfeder. Ein Verdrehen der einander zugeordneten Enden ermöglicht auch eine Anpassung der Drehstabanordnung an unterschiedliche Belastungen und eine Verschiebung der Konstruktionslage, so dass die Radaufhängung beispielsweise an unterschiedliche Leergewichte von unterschiedlichen Fahrzeugtypen angepasst werden kann. Die Konstruktionslage bezeichnet dabei die Radhöhe, welche sich bei der Belastung der Radaufhängung mit einem vorgegebenen Soll-Gewicht des Kraftfahrzeuges ergibt.

Die Querlenkerfeder und die Aufbaufeder können jeweils als Vollstab oder Rohr ausgebildet sein. Im Rahmen der Erfindung liegt auch, dass die Aufbaufeder und/oder die Querlenkerfeder aus zwei oder mehr parallel angeordneten Drehstabfedern zusammengesetzt ist. Die Querlenkerfeder und die Aufbaufeder sind zweckmäßigerweise koaxial in Reihe oder falls zumindest eine der Federn rohrförmig ausgebildet ist, auch konzentrisch ineinander geschachtelt angeordnet. Besonders bevorzugt ist eine Ausgestaltung, bei der die Aufbaufeder und die Querlenkerfeder als rohrförmige Drehstabfedern ausgebildet sind, die konzentrisch angeordnet sind. Bei einer konzentrischen, ineinander geschachtelten Anordnung von Aufbaufeder und Querlenkerfeder ist eine besonders vorteilhafte kompakte Bauart der Radaufhängung möglich, wobei grundsätzlich die Querlenkerfeder und die Aufbaufeder unterschiedliche Längen aufweisen können.

Die Querlenkerfeder und die Aufbaufeder können im Rahmen der Erfindung ohne Einschränkung durch eine lösbare Reibschlussverbindung oder Formschlussverbindung gekoppelt sein. So können die Querlenkerfeder und die Aufbaufeder über eine lösbare Klemmverbindung direkt miteinander gekoppelt sein. Bei einer Ausgestaltung der Aufbaufeder und der Querlenkerfeder als rohrförmige Drehstabfedern und einer konzentrischen Anordnung kann beispielsweise das freie Ende der in radialer Richtung außen angeordneten Drehstabfeder Schlitze aufweisen und mit einer lösbaren Schelle unmittelbar klemmend mit der innen liegenden Drehstabfeder verbunden sein. Um zwischen der Querlenkerfeder und der Drehstabfeder eine Formschlussverbindung bereit zu stellen, kann zwischen den beiden Federn ein Verbindungsteil, beispielsweise in Form einer Muffe, vorgesehen sein. Alternativ können die Querlenkerfeder und die Aufbaufeder über eine arretierbare Zahnradanordnung als Einstellelement verbunden sein. Insbesondere eine solche Ausgestaltung ermöglicht auch das Einstellelement hydraulisch oder elektromagnetisch betätigbar auszuführen, wobei die Radhöhe bei dem Betrieb des Kraftfahrzeuges flexibel an die jeweiligen Erfordernisse angepasst werden kann.

In einer bevorzugten Ausgestaltung der Erfindung ist an den miteinander gekoppelten Enden der Querlenkerfeder und der Aufbaufeder ein am Fahrzeugaufbau befestigbarer Aktuator zur Drehwinkelverstellung der Drehstabanordnung angeordnet. Der Aktuator ist im Hinblick auf die Kraftübertragung von dem Querlenker auf den Fahrzeugaufbau parallel zu der Aufbaufeder angeordnet und ermöglicht durch eine Verdrehung der Drehstabanordnung eine Verstellung der Federkraft. Der Aktuator wird dabei vorzugsweise derart betrieben, dass ein Großteil der statisch auf die Radaufhängung wirkenden Kraft von der parallel angeordneten Aufbaufeder aufgenommen wird, so dass die Drehwinkelverstellung der Drehstabanordnung mit vergleichsweise geringen Drehmomenten erfolgen kann. Durch ein Verdrehen der Drehstabanordnung mittels des Aktuators kann der Radhöhenstand eines an dem Querlenker angeordneten Rades des Kraftfahrzeuges unabhängig von den statischen, aufgrund der Gewichtsbelastung der Radaufhängung wirkenden Kräften und den dynamischen Kräften, an der Radaufhängung, die beispielsweise aufgrund von Fahrbahnunebenheiten oder Fahrmanövern auftreten, konstant gehalten werden. Eine gemeinsame Steuerung der Aktuatoren der Radaufhängungen an einer oder mehrerer Achsen des Kraftfahrzeuges ermöglicht insbesondere eine dynamische Nick- und Wankregelung, wodurch die Fahrsicherheit deutlich erhöht werden kann.

In einer alternativen Ausgestaltung der Erfindung ist vorgesehen, dass an den miteinander gekoppelten Enden der Querlenkerfeder und der Aufbaufeder einerseits und dem Querlenker andererseits ein Aktuator zur Drehwinkelverstellung der Drehstabanordnung angeordnet ist. Der Aktuator ist parallel zu der Querlenkerfeder angeordnet und wird vorzugsweise so betrieben, dass das statische Gewicht im Wesentlichen von der parallel angeordneten Querlenkerfeder aufgenommen wird. Wie zuvor beschrieben ermöglicht der Aktuator sowohl eine statische Niveauregulierung als auch eine dynamische Nick- und Wankregelung.

Der im Bezug auf die Kraftübertragung parallel zur Querlenkerfeder oder Aufbaufeder angeordnete Aktuator kann im Rahmen der Erfindung beispielsweise als hydraulisch betätigbare Zylinderkolbenanordnung oder als elektromechanischer Aktuator ausgeführt sein.

Bei einer hydraulisch betätigbaren Zylinderkolbenanordnung als Aktuator weist dieser typischerweise einen Teleskopzylinder auf, der von einem an einer Kolbenstange angeordneten Stellkolben in zwei Kammern geteilt ist, die über Hydraulikleitungen und unter Zwischenschaltung eines steuerbaren Regel- und Stellelementes an eine Hydraulikquelle angeschlossen werden können.

Bei einer Ausgestaltung des Aktuators als elektromechanischer Aktuator kann dieser direkt von einer Steuer- und Regeleinrichtung angesteuert werden, so dass ein solcher Aktuator sich durch einen einfachen Aufbau auszeichnet. Darüber hinaus kann bei einer geeigneten Ausgestaltung des Aktuators eine hohe Steifigkeit und damit eine klar definierte Drehwinkelverstellung der Drehstabanordnung ermöglicht werden. Der elektromechanische Aktuator weist einen Stellmotor und vorzugsweise auch ein Getriebe auf, um das Drehmoment des Stellmotors an das zur Drehwinkelverstellung der Drehstabanordnung nötige Drehmoment anzupassen.

Im Rahmen der Erfindung weist die Radaufhängung üblicherweise ein passives und/oder ein aktiv steuerbares Dämpfungselement zur Schwingungsdämpfung auf. Das Dämpfungselement ist vorzugsweise als passiver Rotationsdämpfer ausgebildet, der am Querlenker, der Querlenkerfeder oder dem freien Ende der Aufbaufeder angeordnet ist. Der Querlenker bzw. die Drehstabanordnung sind über den passiven Rotationsdämpfer, der beispielsweise aus einem elastomeren Material gebildet sein kann, mit dem Fahrzeugaufbau verbunden. Alternativ kann das Dämpfungselement jedoch auch als Kolbendämpfer, vorzugsweise als aktiv steuerbarer Kolbendämpfer ausgeführt sein, der zweckmäßigerweise zwischen dem Querlenker und dem Fahrzeugaufbau angeordnet ist. Bei dem Einsatz eines aktiv steuerbaren Kolbendämpfers und eines Aktuators zur Drehwinkelverstellung der Drehstabanordnung können besonders vorteilhaft sowohl die Federeigenschaften mittels des Aktuators als auch die Dämpfungseigenschaften durch den aktiv steuerbaren Kolbendämpfer unabhängig voneinander verändert werden. Im Rahmen der Erfindung sind auch grundsätzlich Kombinationen verschiedener passiver und/oder aktiver Dämpfungselemente einsetzbar.

Die erfindungsgemäße Radaufhängung kann zusätzlich zu der federelastischen Drehstabanordnung auch herkömmliche Federelemente wie Schrauben- oder Luftfedern aufweisen, die zur Aufnahme der auf die Radaufhängung wirkenden Gewichtskraft beitragen. Besonders bevorzugt ist eine Ausgestaltung, bei der für die Federung lediglich die Drehstabanordnung vorgesehen ist, da eine solche Ausgestaltung sich durch einen geringen Platzbedarf auszeichnet, wobei insbesondere der Bauraum im Bereich eines Radkastens durch den Wegfall eines herkömmlichen Federbeins minimiert werden kann. Insbesondere kann im Vergleich zu einer herkömmlichen Ausgestaltung, bei der Federbeine vorgesehen sind, durch den Wegfall von Federbeindomen die zur Verfügung stehende Breite eines über einer Fahrzeugachse angeordneten Kofferraums oder Motorraums vergrößert werden.

Die Erfindung wird im Folgenden anhand einer lediglich ein Ausführungsbeispiel darstellenden Zeichnung erläutert. Es zeigen schematisch:
- **Fig. 1a**: eine erfindungsgemäße Radaufhängung für ein Kraftfahrzeug in einer Draufsicht,
- **Fig. 1b**: die Radaufhängung gemäß der Fig. 1a in einer Ansicht von vorne,
- **Fig. 2a**: eine alternative Ausgestaltung einer erfindungsgemäßen Radaufhängung in einer Draufsicht,
- **Fig. 2b**: die Ausgestaltung gemäß Fig. 2a in einer Ansicht von vorne,
- **Fig. 3**: die Radaufhängung gemäß Fig. 2a in einer perspektivischen Ansicht,
- **Fig. 4a**: eine Fahrzeugachse mit erfindungsgemäßen Radaufhängungen in einer perspektivischen Ansicht und
- **Fig. 4b**: die Fahrzeugachse gemäß Fig. 4a in einer Rückansicht.

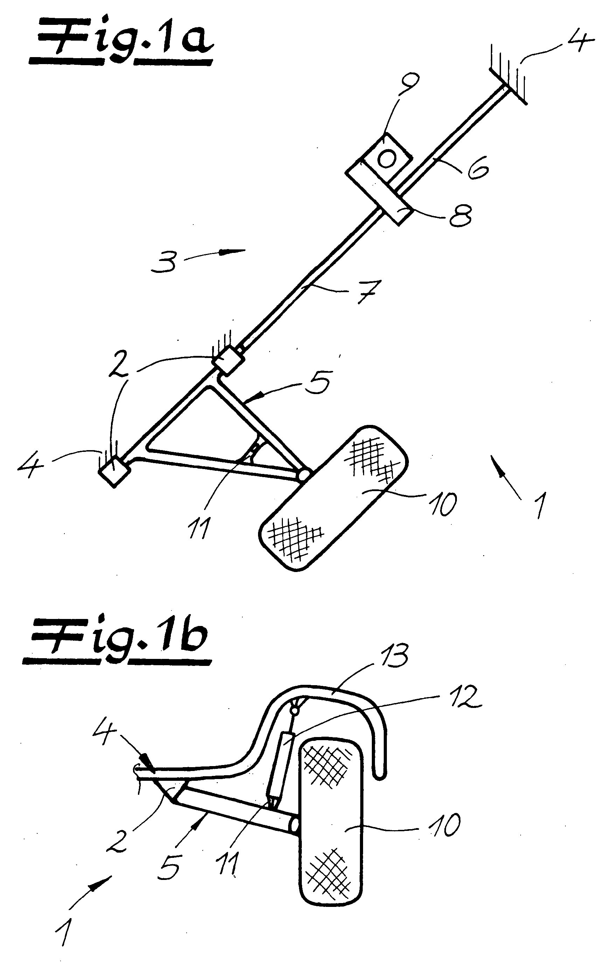

Fig. 1 a zeigt eine erfindungsgemäße Radaufhängung 1 für ein Kraftfahrzeug mit einem über Lager 2 und eine federelastische Drehstabanordnung 3 an einem Fahrzeugaufbau 4 befestigten sowie um eine Längsachse drehbaren Querlenker 5. Die Drehstabanordnung 3 weist eine Aufbaufeder 6 und eine Querlenkerfeder 7 auf, wobei die Aufbaufeder 6 mit einem Ende am Fahrzeugaufbau 4 und die Querlenkerfeder 7 an einem Ende am Querlenker 5 befestigt ist. Die freien Enden von Querlenkerfeder 7 und Aufbaufeder 6 sind über ein Getriebe 8 als Einstellelement, welches zu Einstellzwecken ein Verdrehen der einander zugeordneten Enden gegeneinander ermöglicht, gekoppelt. Das Getriebe 8 als Einstellelement ist von einem Elektromotor 9 antreibbar und in der gewünschten Einstellposition arretierbar. Der Querlenker 5, an dem ein Fahrzeugrad 10 angeordnet ist, weist einen Anschluss 11 für einen Kolbendämpfer 12 oder ein herkömmliches Federbein auf. Fig. 1b zeigt die Anordnung gemäß Fig. 1 a in einer Ansicht von vorne. Während das Fahrzeuggewicht über die federelastische Drehstabanordnung 3 abgestützt ist, erfolgt die Schwingungsdämpfung über einen aktiv steuerbaren Kolbendämpfer 12 als Dämpfungselement. Da in der dargestellten Ausführung die Anordnung eines herkömmlichen Federbeines nicht vorgesehen ist, ist der Platzbedarf der Radaufhängung 1 im Bereich des Radkastens 13 in vorteilhafter Weise reduziert.

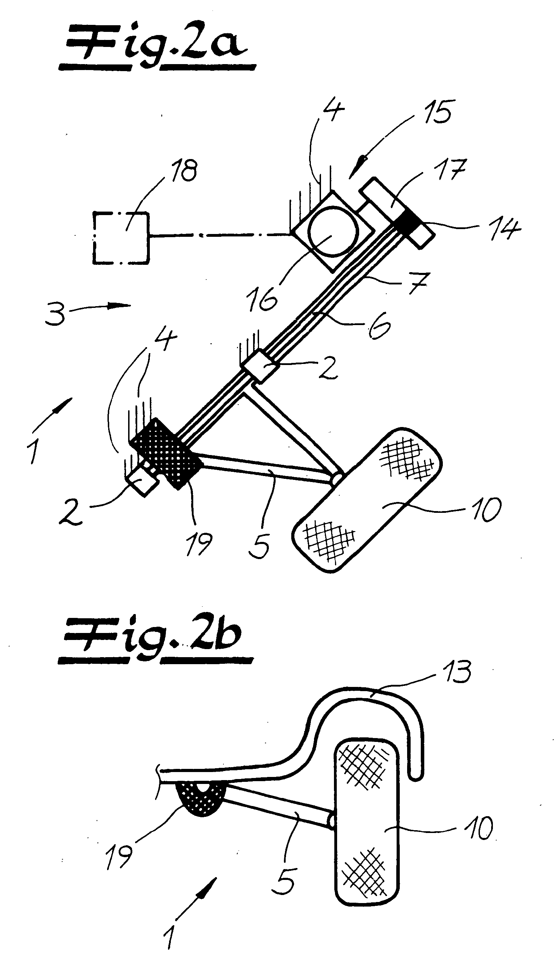

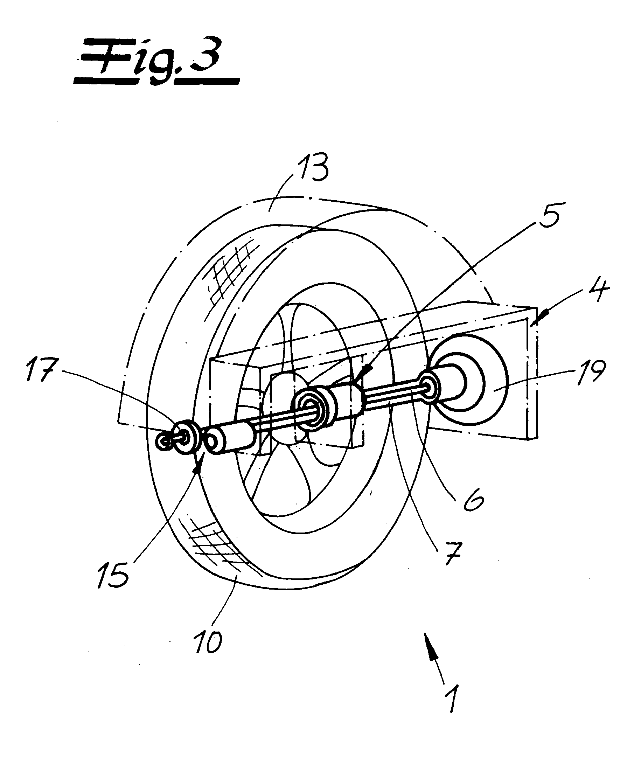

Fig. 2a und Fig. 3 zeigen eine besonders kompakte und Platz sparende Ausgestaltung der erfindungsgemäßen Radaufhängung 1. Die Aufbaufeder 6 und die Querlenkerfeder 7 sind als rohrfömige Drehstabfedern ausgebildet und konzentrisch angeordnet, wobei die Aufbaufeder 6 in die Querlenkerfeder 7 eingesetzt ist. Die Aufbaufeder 6 und die Querlenkerfeder 7 sind an ihren freien Enden über eine lösbare Verbindung 14 miteinander gekoppelt, wobei die Verbindung 14 beispielsweise als Klemmverbindung ausgeführt sein kann. An den miteinander verbundenen Enden der Querlenkerfeder 7 und der Aufbaufeder 6 ist ein Aktuator 15 zur Drehwinkelverstellung der Drehstabanordnung 3 befestigt. Der elektromechanische Aktuator 15 weist einen am Fahrzeugaufbau 4 befestigten Stellmotor 16 und ein Untersetzungsgetriebe 17 auf. Der Aktuator 15 ist sowohl zur statischen und dynamischen Niveauregulierung als auch zur dynamischen Nick- und Wankregelung an eine zentrale Steuereinheit 18 angeschlossen. Als passives Dämpfungselement ist ein Rotationsdämpfer 19 vorgesehen, der beispielsweise aus einem elastomeren Kunststoff gebildet sein kann. Wie Fig. 2b zu entnehmen ist, ist der Platzbedarf der Radaufhängung 1 im Vergleich zu einem herkömmlichen Federbein äußerst gering. Während in der Ausgestaltung gemäß Fig. 2a der Aktuator 15 zwischen den miteinander gekoppelten Enden der Querlenkerfeder 7 und der Aufbaufeder 6 einerseits und dem Fahrzeugaufbau 4 andererseits befestigt ist, kann dieser in einer nicht dargestellten, alternativen Ausgestaltung der Erfindung auch ohne Einschränkung zwischen den miteinander gekoppelten Enden der Querlenkerfeder 7 und der Aufbaufeder 6 einerseits und dem Querlenker 5 andererseits angeordnet sein, wobei der Aktuator dann nicht wie bei Fig. 2a dargestellt in Bezug auf die Kraftübertragung von dem Fahrzeugrad 10 auf den Fahrzeugaufbau 4 parallel zu der Aufbaufeder 6 sondern parallel zu der Querlenkerfeder 7 angeordnet ist.

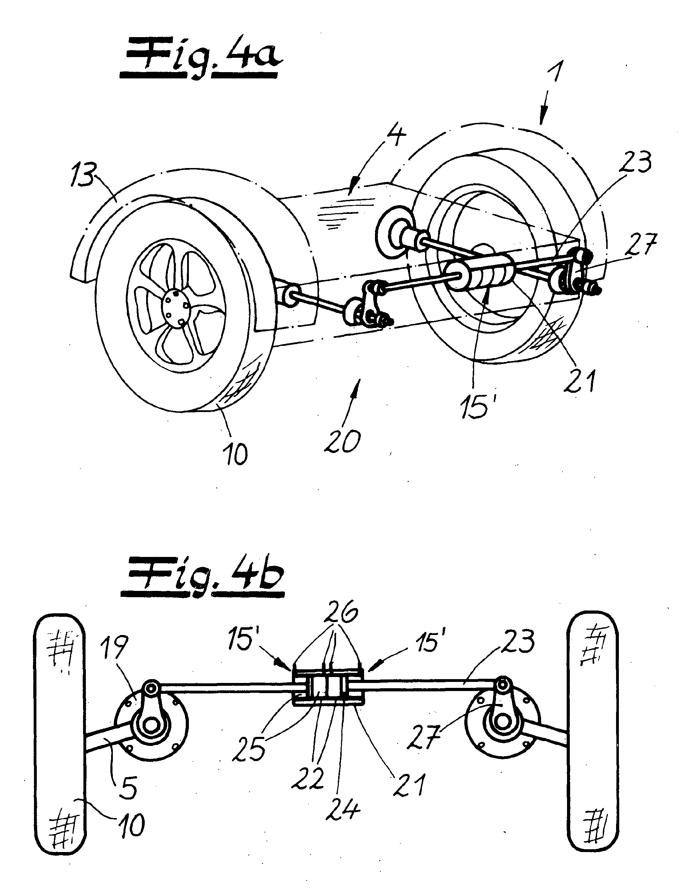

Fig. 4a zeigt eine Fahrzeugachse 20 mit erfindungsgemäßen Radaufhängungen 1. Wie bei der Ausgestaltung gemäß Fig. 2a sind die Aufbaufeder 6 und die Querlenkerfeder 7 als rohrförmige Drehstabfedern ausgebildet und konzentrisch angeordnet. Zwischen den miteinander gekoppelten Enden der Querlenkerfeder 7 und der Aufbaufeder 6 einerseits und dem Fahrzeugaufbau 4 andererseits ist bei jeder der beiden Radaufhängungen 1 eine hydraulisch betätigbare Zylinderkolbenanordnung als Aktuator 15' vorgesehen. Die hydraulischen Aktuatoren 15' weisen in einem gemeinsamen Gehäuse 21 jeweils einen Teleskopzylinder 22 auf, in dem ein an einer Kolbenstange 23 befestigter Stellkolben 24 verschiebbar angeordnet ist. Der Stellkolben 24 teilt den zugeordneten Teleskopzylinder 22 in zwei Kammern 25, wobei jede der Kammern 25 einen Hydraulikanschluss 26 aufweist. Durch eine unterschiedliche Beaufschlagung der Kammern 25 mit Hydraulikflüssigkeit kann der Stellkolben 24 mit der Kolbenstange 23 in dem Teleskopzylinder 22 verschoben werden. Die Kolbenstange 23 wirkt dabei über einen Hebelarm 27 auf die miteinander verbundenen Enden von Querlenkerfeder 7 und Aufbaufeder 6. Die hydraulisch betätigbare Zylinderkolbenanordnung ist über die Hydraulikanschlüsse 26 an ein nicht dargestelltes Hydrauliksystem mit Hydraulikleitungen, Regel- und Stellelementen und eine Hydraulikquelle angeschlossen. Die Aufbaufeder 6 und/oder die Querlenkerfeder 7 können jeweils aus zwei oder mehr parallel angeordneten Drehstabfedern zusammengesetzt sein.

## Patentansprüche

1. Radaufhängung (1) für ein Kraftfahrzeug mit einem über Lager (2) und eine federelastische Drehstabanordnung (3) an einem Fahrzeugaufbau (4) befestigbaren sowie um eine Längsachse drehbaren Querlenker (5), wobei die Drehstabanordnung (3) eine mit einem Ende an dem Fahrzeugaufbau (4) befestigbare Aufbaufeder (6) und eine mit einem Ende am Querlenker (5) befestigte Querlenkerfeder (7) aufweist und wobei die Aufbaufeder (6) und die Querlenkerfeder (7) an ihren freien Enden miteinander gekoppelt sind, **dadurch gekennzeichnet, dass** die Querlenkerfeder (7) und die Aufbaufeder (6) über ein Einstellelement oder eine lösbare Verbindung (14) gekoppelt sind, wobei das Einstellelement oder die lösbare Verbindung (14) zu Einstellzwecken ein Verdrehen der einander zugeordneten Enden gegeneinander ermöglicht.

2. Radaufhängung (1) nach Anspruch 1, **dadurch gekennzeichnet, dass** die Querlenkerfeder (7) und die Aufbaufeder (6) über eine arretierbare Zahnradanordnung verbunden sind.

3. Radaufhängung (1) nach Anspruch 1 oder 2, **dadurch gekennzeichnet, dass** das Einstellelement hydraulisch oder elektromechanisch betätigbar ist.

4. Radaufhängung (1) nach Anspruch 1, **dadurch gekennzeichnet, dass** die Querlenkerfeder (7) und die Aufbaufeder (6) über eine lösbare Klemmverbindung gekoppelt sind.

5. Radaufhängung (1) nach einem der Ansprüche 1 bis 4, **dadurch gekennzeichnet, dass** zwischen den miteinander gekoppelten Enden der Querlenkerfeder (7) und der Aufbaufeder (6) einerseits und dem Querlenker (5) andererseits ein Aktuator (15; 15') zur Drehwinkelverstellung der Drehstabanordnung (3) angeordnet ist.

6. Radaufhängung (1) nach einem der Ansprüche 1 bis 4, **dadurch gekennzeichnet, dass** an den miteinander gekoppelten Enden der Querlenkerfeder (7) und der Aufbaufeder (6) ein am Fahrzeugaufbau (4) befestigbarer Aktuator (15; 15') zur Drehwinkelverstellung der Drehstabanordnung (3) angeordnet ist.

7. Radaufhängung (1) nach Anspruch 5 oder 6, **dadurch gekennzeichnet, dass** der Aktuator (15') als hydraulisch betätigbare Zylinderkolbenanordnung ausgeführt ist.

8. Radaufhängung (1) nach Anspruch 5 oder 6, **dadurch gekennzeichnet, dass** der Aktuator (15) ein elektromechanischer Aktuator (15) ist.

9. Radaufhängung (1) nach einem der Ansprüche 6 bis 8, **dadurch gekennzeichnet, dass** der Aktuator (15; 15') zur aktiven Verstellung der Federkraft an eine Steuereinheit (18) angeschlossen ist.

10. Radaufhängung (1) nach einem der Ansprüche 1 bis 9, **dadurch gekennzeichnet, dass** die Radaufhängung (1) ein passives und/oder ein aktiv steuerbares Dämpfungselement aufweist.

11. Radaufhängung (1) nach einem der Ansprüche 1 bis 10, **dadurch gekennzeichnet, dass** die Aufbaufeder (6) und die Querlenkerfeder (7) als rohrförmige Drehstabfedern ausgebildet sind, die konzentrisch angeordnet sind.

12. Radaufhängung (1) nach einem der Ansprüche 1 bis 10, **dadurch gekennzeichnet, dass** die Aufbaufeder (6) und/oder die Querlenkerfeder (7) aus zwei oder mehr parallel angeordneten Drehstabfedern zusammengesetzt sind.
